# EUROPEAN PATENT APPLICATION

(11) **EP 3 574 745 A1**
(43) Date of publication of application: **04.12.2019**
(21) Application number: 19180118.2
(22) Date of filing: 13.08.2012
(51) Int. Cl.: A01G 13/02, B65H 75/18, B65B 67/08, B65H 19/10, B65H 16/06

(54) **AN END PLUG FOR A ROLL OF FILM FOR USE IN AGRICULTURE**

(30) Priority: 11.08.2011 IE S20110354
(62) Divisional of application: 18197021.1
(71) Applicant: Samco Agricultural Manufacturing Limited, County Limerick (IE)
(72) Inventor: Shine, Samuel James, County Limerick (IE)
(74) Representative: Purdylucey Intellectual Property

(57) **Abstract**

The invention provides an end plug having a spindle receiving bore (45) extending therethrough, and being engageable in a plug receiving bore (9, 42) of a core element (8) of a roll (1) of film (3) with the spindle receiving bore (45) concentric with a central axis (37) of the core element (8), the end plug (43) comprising, a means (49) for engaging the plug receiving bore (9, 42) of the core element (8) with the end plug (43) fast with the core element (8). The invention also provides a roll of film comprising a core element (8) on which film (3) is wound, the core element (8) having an elongated bore (9, 42) extending longitudinally therethrough and concentric with the core element (8) and an end plug (43) located in the bore (9, 42) of the core element (8) adjacent one end thereof, the end plug (43) comprising a means (49) for engaging the bore (9, 42) of the core element (8) with the end plug (43) fast with the core element (8).

## Description

The present invention relates to a film for covering soil with seeds sown therein, and in particular, for covering soil with seeds germinating in the soil, and in particular, for covering soil in which corn seeds are germinating, however, the invention is not limited to the use of the film for covering soil in which corn seeds are sown. The invention also relates to a method for growing seeds, and in particular, though not limited to a method for growing corn seeds in soil, and the invention also relates to a bed of soil having seeds sown therein, and in particular, though not limited to corn seeds sown in the bed.

It is known to grow seeds in beds of soil covered with film material, typically translucent or transparent plastics film material. In cool temperate climates, such as the climate experienced in Ireland, the United Kingdom, and the temperate western parts of Continental Europe, particularly those parts of Western Europe with a temperate climate on the Atlantic seaboard, corn is commonly grown from seeds under such film material. Typically one, and more typically two longitudinally extending spaced apart parallel rows of corn seeds are sown on a raised longitudinally extending bed of soil. The seeds are sown in the rows at appropriately spaced apart intervals. An elongated sheet of plastics film material is laid over the bed, and side portions of the film are folded downwardly on opposite sides of the bed and at least partly encased in soil. The side portions of the film are encased or partly encased in soil by backing filling the soil against the side portions of the film, so that the side portions are entrapped between the soil of the bed and the back-filled soil.

Two problems are encountered with such film material. Firstly, the film is vulnerable to strong winds, which can lift the film from the bed, thus disengaging the side portions of the film which had been encased in the soil. Once the side portions have been disengaged from the soil, the film can be blown away from the bed. It has been found that once a strong wind gets under the film, encasing the side portions of the film is insufficient for anchoring the film on the bed.

A second problem associated with such films is that when the seeds germinate and plants begin to grow from the seeds, the plants in many cases are retained captive beneath the film unable to burst through the film. This significantly retards and stunts growth of the plants. It is known to provide openings in the film of dimensions of the order of 5mm to 20mm to accommodate a corresponding plant through the film. However, in general, even if the seeds are sown in registration with such openings in the film, the plants growing from the seeds are not always aligned with the openings. In many cases a plant may commence to grow sidewardly from a seed before it grows upwardly, and thus even if the seeds were originally aligned with the openings, the plants would be misaligned, and thus would not grow through the openings.

There is therefore a need for a film which addresses at least one of these problems of known film materials, and there is also a need for a method for covering seeds with a film.

The present invention is directed towards providing a film for covering soil with seeds sown therein. The invention is also directed towards a method for growing seeds in soil, and the invention is further directed towards an elongated bed of soil having seeds sown therein.

According to the invention there is provided a film adapted for covering soil in which seeds are sown, the film comprising a translucent plastics material, and having a longitudinally extending central portion defining a longitudinally extending main centre line and extending on both sides of the centre line, a pair of longitudinally extending opposite side portions on respective opposite sides of the central portion, the side portions defining respective longitudinally extending side edges and being adapted to be at least partly encased in soil adjacent the respective side edges for anchoring the film, and a pair of longitudinally extending opposite intermediate portions located on opposite sides of the central portion between the central portion and the respective side portions, a plurality of spaced apart first openings extending through the film in the central portion, the first openings being adapted for accommodating rainwater from an outer surface of the film to the soil, and a plurality of spaced apart first keying means located in the respective side portions, the first keying means being adapted for engaging the soil in which the side portions are encased for retaining the side portions in the soil.

In one aspect of the invention each first opening is of diameter in the range of 6mm to 15mm. Preferably, each first opening is of diameter in the range of 8mm to 13mm. Advantageously, each first opening is of diameter of approximately 10mm.

Preferably, each first opening is of circular shape. Advantageously, the first openings are located in a longitudinally extending row, and are spaced apart longitudinally from each other centre to centre a distance lying in the range of 50mm to 800mm. Preferably, the first openings are spaced apart from each other centre to centre in the row of first openings a distance lying in the range of 100mm to 300mm. Ideally, the first openings are spaced apart from each other centre to centre in the row of first openings a distance of approximately 150mm.

In one embodiment of the invention two rows of the first openings are located in the central portion of the film, the rows of the first openings being spaced apart from each other transversely relative to the main centre line of the film defined by the central portion. Preferably, the rows of the first openings are equi-spaced apart from the main centre line of the film defined by the central portion of the film on opposite sides thereof. Advantageously, the rows of the first openings extend parallel to each other.

In another aspect of the invention the spacing between the rows of the first openings lies in the range of 50mm to 500mm. Preferably, the spacing between the rows of the first openings lies in the range of 80mm to 200mm. Advantageously, the spacing between the rows of the first openings is approximately 100mm.

In one embodiment of the invention each first keying means comprises a second opening extending through the film in the corresponding side portion thereof for accommodating soil therein.

Preferably, each second opening is of diameter in the range of 3mm to 8mm. Advantageously, each second opening is of diameter in the range of 4mm to 7mm. Ideally, each second opening is of diameter of approximately 5mm.

Preferably, each second opening is of circular area.

Advantageously, the second openings are arranged in spaced apart rows of the second openings in the corresponding side portion.

Preferably, the spacing between the second openings centre to centre in each row of second openings lies in the range of 10mm to 50mm. Advantageously, the spacing between the second openings centre to centre in each row of second openings lies in the range of 15mm to 35mm. Ideally, the spacing between the second openings centre to centre in each row of second openings is approximately 25mm.

In one aspect of the invention the rows of the second openings in each side portion of the film extend parallel to each other. Preferably, the perpendicular spacing between adjacent rows of the second openings in the corresponding side portion lies in the range of 50mm to 400mm. Advantageously, the perpendicular spacing between adjacent rows of the second openings in the corresponding side portion lies in the range of 100mm to 200mm. Ideally, the perpendicular spacing between adjacent rows of the second openings in the corresponding side portion is approximately 135mm.

In another aspect of the invention the rows of the second openings in the corresponding side portion extend at an angle greater than zero to the main centre line of the film. Preferably, the rows of the second openings in the corresponding side portion extend at an angle to the main centre line of the film in the range of 10° to 60°. Advantageously, the rows of the second openings in the corresponding side portion extend at an angle to the main centre line of the film in the range of 20° to 50°. Ideally, the rows of the second openings in the corresponding side portion extend at an angle to the main centre line of the film of approximately 41°.

Preferably, the rows of the second openings extend substantially the width of the corresponding side portion.

Advantageously, the rows of the second openings extend towards the adjacent side edge of the film in the corresponding side portion, each row of the second openings terminating at a location spaced apart from the adjacent side edge of the film a distance perpendicular to the side edge of the film of not more than 30mm. Preferably, each row of the second openings terminates at a location spaced apart from the adjacent side edge of the film a distance perpendicular to the side edge of the film of not more than 20mm. Ideally, each row of the second openings terminates at a location spaced apart from the adjacent side edge of the film a distance perpendicular to the side edge of the film of approximately 12mm.

In one aspect of the invention the length of each row of the second openings lies in the range of 100mm to 300mm. Preferably, the length of each row of the second openings lies in the range of 150mm to 250mm. Advantageously, the length of each row of the second openings is approximately 200mm.

In one aspect of the invention the rows of the second openings in each side portion are spaced apart from an adjacent one of the rows of the first openings a perpendicular distance from the adjacent row of first openings in the range of 300mm to 500mm. Preferably, the rows of the second openings in each side portion are spaced apart from the adjacent row of the first openings a perpendicular distance in the range of 350mm to 450mm. Advantageously, the rows of the second openings in each side portion are spaced apart from the adjacent row of the first openings a perpendicular distance of approximately 400mm.

In one aspect of the invention the rows of the second openings in the respective side portions of the film are configured in a herringbone pattern.

In another aspect of the invention each intermediate portion of the film is adapted to cover the soil adjacent a corresponding longitudinally extending row of the seeds.

In one aspect of the invention a plurality of third openings extending through the film are located in the respective intermediate portions of the film. Preferably, the third openings are adapted to in use accommodate exchange of air between the ambient environment and one or more voids which in use form between the film and the soil. Preferably, the third openings of each intermediate portion are adapted to in use be located adjacent the corresponding row of seeds.

In one aspect of the invention each third opening is of diameter in the range of 3mm to 8mm. Preferably, each third opening is of diameter in the range of 4mm to 7mm. Advantageously, each third opening is of diameter of approximately 5mm.

In one aspect of the invention each third opening is of circular shape. Preferably, the third openings in each intermediate portion are arranged in rows of the third openings. Advantageously, the spacing between the third openings centre to centre in each row of third openings lies in the range of 10mm to 50mm. Preferably, the spacing between the third openings centre to centre in each row of third openings lies in the range of 15mm to 35mm. Advantageously, the spacing between the third openings centre to centre in each row of third openings is approximately 25mm.

In another embodiment of the invention the third openings are configured in each row of third openings so that each row of third openings forms a severable line of perforations.

Preferably, the severable line of perforations formed by each row of third openings is adapted to sever in response to upward urging of the corresponding intermediate portion of the film adjacent the row of the third openings by a plant growing from one of the seeds in the corresponding row of seeds in order to accommodate the plant to extend through the film.

Advantageously, the rows of the third openings in each intermediate portion of the film extend parallel to each other.

In one aspect of the invention the perpendicular distance between adjacent ones of the rows of the third openings is less than the perpendicular distance between adjacent ones of the rows of the second openings. Preferably, the perpendicular distance between adjacent ones of the rows of the third openings lies in the range of 20mm to 200mm. Advantageously, the perpendicular distance between adjacent ones of the rows of the third openings lies in the range of 40mm to 100mm. Ideally, the perpendicular distance between adjacent ones of the rows of the third openings is approximately 68mm.

In another embodiment of the invention the rows of the third openings extend relative to the main centre line of the film at an angle thereto greater than zero. Preferably, the rows of the third openings extend at an angle to the main centre line of the film which lies in the range of 10° to 60°. Advantageously, the rows of the third openings extend at an angle to the main centre line of the film which lies in the range of 20° to 50°. Ideally, the rows of the third openings extend at an angle to the main centre line of the film of approximately 41°.

In another embodiment of the invention the rows of the third openings in the respective intermediate portions of the film are configured in a herringbone pattern.

In one embodiment of the invention the rows of the third openings are centred transversely in the corresponding intermediate portion of the film.

Preferably, the length of each row of the third openings lies in the range of 150mm to 400mm. Advantageously, the length of each row of the third openings lies in the range of 200mm to 300mm. Ideally, the length of each row of the third openings is approximately 250mm.

In another aspect of the invention each row of the third openings in the corresponding intermediate portion is spaced apart from the adjacent one of the rows of the first openings a perpendicular distance from the adjacent row of the first openings in the range of 25mm to 125mm. Preferably, each row of the third openings in the corresponding intermediate portion is spaced apart from the adjacent one of the rows of the first openings a perpendicular distance from the adjacent row of the first openings in the range of 40mm to 80mm. Advantageously, each row of the third openings in the corresponding intermediate portion is spaced apart from the adjacent one of the rows of the first openings a perpendicular distance from the adjacent row of the first openings of approximately 68mm.

In another aspect of the invention the rows of the second openings in each side portion are aligned with alternate ones of the rows of the third openings in the adjacent intermediate portion of the film.

In a further aspect of the invention the rows of the third openings in each intermediate portion of the film are spaced apart transversely from the rows of the second openings in the adjacent side portion of the film.

Preferably, the rows of the third openings in each intermediate portion of the film are transversely spaced apart relative to the main centre line of the film from the rows of the second openings in the adjacent side portion of the film a distance in the range of 50mm to 300mm. Advantageously, the rows of the third openings in each intermediate portion of the film are transversely spaced apart relative to the main centre line of the film from the rows of the second openings in the adjacent side portion of the film a distance in the range of 80mm to 200mm. Ideally, the rows of the third openings in each intermediate portion of the film are transversely spaced apart relative to the main centre line of the film from the rows of the second openings in the adjacent side portion of the film a distance of approximately 120mm.

In one embodiment of the invention the width of the film lies in the range of 500mm to 3,000mm. Preferably, the width of the film lies in the range of 1,000mm to 2,000mm. Advantageously, the width of the film is approximately 1,375mm.

In another aspect of the invention the width of the central portion of the film lies in the range of 250mm to 750mm. Preferably, the width of the central portion of the film lies in the range of 300mm to 600mm. Advantageously, the width of the central portion of the film is approximately 489mm.

Preferably, the width of each side portion of the film lies in the range of 100mm to 300mm. Advantageously, the width of each side portion of the film lies in the range of 150mm to 250mm. Ideally, the width of each side portion of the film is approximately 210mm.

In another aspect of the invention the width of each intermediate portion of the film lies in the range of 80mm to 250mm. Preferably, the width of each intermediate portion of the film lies in the range of 100mm to 200mm. Advantageously, the width of each intermediate portion of the film is approximately 160mm.

In one embodiment of the invention the plastics material of the film is tinted with a primary colour.

In another embodiment of the invention the plastics material of the film is tinted with a green colouring. In a further embodiment of the invention the plastics material of the film is tinted with a yellow colouring.

In one aspect of the invention the film is of a substantially transparent material.

Preferably, the thickness of the film lies in the range of 4 microns to 9 microns. Advantageously, the thickness of the film lies in the range of 6 microns to 8 microns. Ideally, the thickness of the film is approximately 7 microns.

In one embodiment of the invention the film is configured into a roll. Preferably, the film is wound onto an elongated core element to form the roll. Advantageously, a pair of spindle receiving bores concentric with the core element extends into the core element at respective opposite ends thereof.

In one embodiment of the invention one of the spindle receiving bores is adapted to receive an idler spindle of a film dispenser for mounting the roll in the film dispenser for dispensing film therefrom.

In another embodiment of the invention the other one of the spindle receiving bores is adapted for receiving a tensioning spindle of the film dispenser for tensioning the roll of film as the film is being drawn from the roll.

Preferably, a second keying means is provided for keying the core element to the tensioning spindle of the film dispenser.

Advantageously, an end plug is engaged in the core element adjacent one end thereof, the end plug defining the corresponding spindle receiving bore for receiving the tensioning spindle.

Preferably, the second keying means comprises one of a pair of interengageable complimentary formations formed on the end plug for engaging the other one of the pair of interengageable complementary formations formed on the tensioning spindle.

Advantageously, the end plug is engageable in a plug receiving bore concentric with the core element extending into the core element from the end thereof opposite to the end of the core element into which the spindle receiving bore extends to receive the idler spindle of the film dispenser.

Preferably, the end plug is adapted to form an interference fit in the plug receiving bore of the core element in order that the core element is fast on the end plug.

In one embodiment of the invention the film is adapted for dispensing from a film dispenser mounted on a seed planter simultaneously as seeds are being sown in the soil for covering the planted seeds.

The invention also provides an elongated bed of soil having at least one longitudinally extending row of seeds sown therein, and the film according to the invention covering the bed with the film extending longitudinally along the bed, and the respective side portions of the film at least partly encased in soil on respective opposite sides of the bed and keyed to the encased soil by the first keying means.

Further the invention provides an elongated bed of soil having at least one longitudinally extending row of seeds sown therein, an elongated film of translucent plastics material located over the bed covering the seeds, the film having a longitudinally extending central portion defining a longitudinally extending main centre line of the film and extending longitudinally and centrally along the bed, a pair of longitudinally extending opposite side portions on respective opposite sides of the central portion, the side portions being at least partly encased in soil on respective opposite sides of the bed for anchoring the film, and a pair of longitudinally extending opposite intermediate portions located on opposite sides of the central portion between the central portion and the respective side portions, at least one of the intermediate portions extending longitudinally along and over the at least one row of seeds, a plurality of spaced apart first openings extending through the film in the central portion, the first openings being adapted for accommodating rainwater from the outer surface of the film to the soil, and a plurality of spaced apart first keying means located in the respective side portions of the film, the first keying means being adapted for engaging the soil in which the side portions are encased for retaining the side portions in the soil.

In one embodiment of the invention each first keying means comprises a second opening extending through the film in the corresponding side portion thereof for accommodating soil therein of the soil in which the corresponding side portion of the film is encased.

Preferably, the rows of the second openings in each side portion are spaced apart from an adjacent one of the rows of the first openings a perpendicular distance from the adjacent row of the first openings in the range of 100mm to 300mm. Advantageously, the rows of the second openings in each side portion are spaced apart from an adjacent one of the rows of the first openings a perpendicular distance from the adjacent row of the first openings in the range of 125mm to 200mm. Ideally, the rows of the second openings in each side portion are spaced apart from an adjacent one of the rows of the first openings a perpendicular distance from the adjacent row of the first openings of approximately 150mm.

Preferably, the rows of the second openings in the respective side portions of the film are configured in a herringbone pattern.

In one embodiment of the invention each intermediate portion of the film extends longitudinally along and over the corresponding longitudinally extending row of the seeds to cover the soil adjacent the corresponding row of the seeds. Preferably, a plurality of third openings extending through the film are located in the respective intermediate portions of the film adjacent the corresponding longitudinally extending row of the seeds. Advantageously, the third openings are adapted to in use accommodate exchange of air between the ambient environment and one or more voids which in use form between the film and the soil.

Ideally, the third openings of each intermediate portion are located adjacent the corresponding row of seeds.

In one embodiment of the invention two rows of spaced apart seeds are sown in the bed, and the intermediate portions of the film are located over the respective rows of the seeds.

In another embodiment of the invention the seeds are corn seeds.

The invention further provides a method for growing seeds in an elongated bed of soil, the method comprising sowing the seeds in the soil in at least one elongated row extending longitudinally along the bed, covering the bed with an elongated film of translucent plastics material, the film having a longitudinally extending central portion and a pair of longitudinally extending opposite side portions on respective opposite sides of the central portion, and a pair of longitudinally extending opposite intermediate portions located on opposite sides of the central portion between the central portion and the respective side portions, a plurality of spaced apart first openings extending through the film in the central portion for accommodating rainwater from an outer surface of the film to the soil in the bed, and a plurality of spaced apart first keying means located in the respective side portions, locating the film relative to the bed with the central portion extending longitudinally and centrally along the bed, and with at least one of the intermediate portions located over and extending longitudinally along the at least one row of seeds, and at least partly encasing the side portions of the film in soil adjacent respective opposite sides of the bed with the keying means engaging the soil encasing the side portions for anchoring the film on the bed.

In one embodiment of the invention each first keying means comprises a second opening extending through the film in the corresponding side portion thereof for accommodating soil therein of the soil in which the corresponding side portion of the film is encased.

In one aspect of the invention the film is placed on the bed with each intermediate portion of the film extending longitudinally along and over a corresponding one of the at least one longitudinally extending row of the seeds.

Preferably, a plurality of third openings extending through the film are located in the respective intermediate portions of the film.

Advantageously, the third openings accommodate exchange of air between the ambient environment and one or more voids formed between the film and the soil.

Preferably, the film is placed on the bed with the third openings of each intermediate portion located adjacent the corresponding row of seeds.

In another aspect of the invention the film is adapted for dispensing from a seed planter simultaneously as seeds are being planted in the soil for covering the planted seeds.

Further the invention provides a tensioning spindle of a film dispenser for engaging a roll of film, the tensioning spindle comprising a stationary shaft, a spindle element rotatably carried on the stationary shaft on a bearing means, the spindle element being adapted to engage the roll of film and to rotate with the roll of film, a friction inducing means for inducing frictional resistance in the bearing means in order to induce tension in the film as the film is being drawn from the roll of film, and an adjusting means for adjusting the frictional resistance induced in the bearing means.

Preferably, a pair of adjacent tapered roller bearings are mounted on the stationary shaft with cages of rollers of the respective roller bearings tapering in opposite directions relative to each other.

Advantageously, the friction inducing means comprises a compression spring mounted on the stationary shaft and adapted for urging one of an inner core elements and an outer sleeves of the respective tapered roller bearings towards each other for in turn increasing the frictional resistance between the cages of rollers of the respective roller bearings and the inner core element and the outer sleeve of the respective roller bearings.

In one aspect of the invention the adjusting means comprises an urging means for urging the compression spring into engagement with the one of the inner core element and the sleeve of one of the tapered roller bearings and for adjusting the urging force with which the ones of the inner core elements and the outer sleeves of the respective tapered roller bearings are urged towards each other.

In another aspect of the invention the adjusting means comprises a nut carried on a threaded portion of the stationary shaft for urging the compression spring into engagement with the one of the inner core element and the sleeve of one of the tapered roller bearings and for altering the compression force exerted by the compression spring on the one of the inner core element and the outer sleeve of the adjacent tapered roller bearing for in turn varying the force with which the ones of the inner core element and the outer sleeve of the tapered roller bearings are urged towards each other.

The advantages of the invention are many. By providing the first keying means in the side portions of the film, the side portions are keyed into the soil when the soil at least partially encases the side portions of the film, by, for example, back-filling soil over at least a portion of the side portions. Once keyed into the encasing soil, the side portions are securely anchored, and the side portions are no longer vulnerable to being disengaged from the encasing soil by relatively strong winds. By providing the first keying means as comprising second openings through the side portions of the film, particularly good keying of the side portions is achieved sine the soil is accommodated in the second openings and extends through the second openings between the soil of the bed and the back-filled soil. This thus allows the back-filled soil and the soil of the bed to form a single homogeneous mass extending through the second openings in the side portion, which thereby act to solidly key the side portions in the soil.

By providing the third openings in rows of third openings in the intermediate portions of the film and configuring the third opening in the rows of third openings to form respective severable rows of perforations, which perforate to form respective elongated slits in response to upward urging of the film by the plants growing from the seeds, there is no danger of the plants being entrapped within the film, since the plants grow through the formed elongated slits, thus avoiding any retarding or stunting of the plants.

The invention will be more clearly understood from the following description of some preferred embodiments thereof, which are given by way of example only, with reference to the accompanying drawings, in which:
Fig. 1 is a perspective view of a roll of film according to the invention,
Fig. 2 is a cross-sectional side elevational view of the roll of film of Fig. 1,
Fig. 3 is a plan view of a portion of the film also according to the invention unwound from the roll of Fig. 1,
Fig. 4 is an end elevational view of a portion of the roll of Fig. 1,
Fig. 5 is an end elevational view of the portion of Fig. 4 of the roll of Fig. 1 from the opposite direction to that of Fig. 4,
Fig. 6 is a cross-sectional side elevational view of the portion of Fig. 4 of the roll of Fig. 1 on the line VI-VI of Fig. 5,
Fig. 7 is a side elevational view of a detail of the portion of Fig. 4 of the roll of Fig. 1,
Fig. 8 is an exploded perspective view illustrating the portion of Fig. 4 of the roll of Fig. 1 and a tensioning spindle also according to the invention of a dispensing apparatus with which the roll of plastics film is engageable,
Fig. 9 is another perspective view of the portion of Fig. 4 and a portion of the tensioning spindle of Fig. 8,
Fig. 10 is a perspective view of a bed of soil according to the invention covered with the film of Fig. 3,
Fig. 11 is another perspective view of the bed of Fig. 10,
Fig. 12 is a plan view of a portion of a film according to another embodiment of the invention unwound from a roll thereof, and
Fig. 13 is a perspective view of a bed of soil also according to the invention covered with the film of Fig. 12.

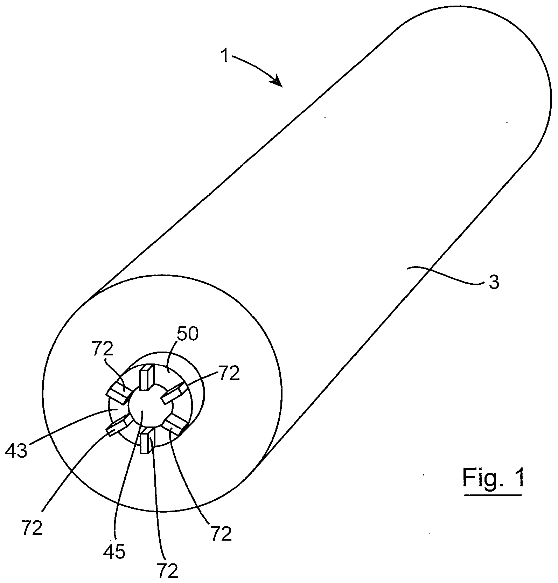

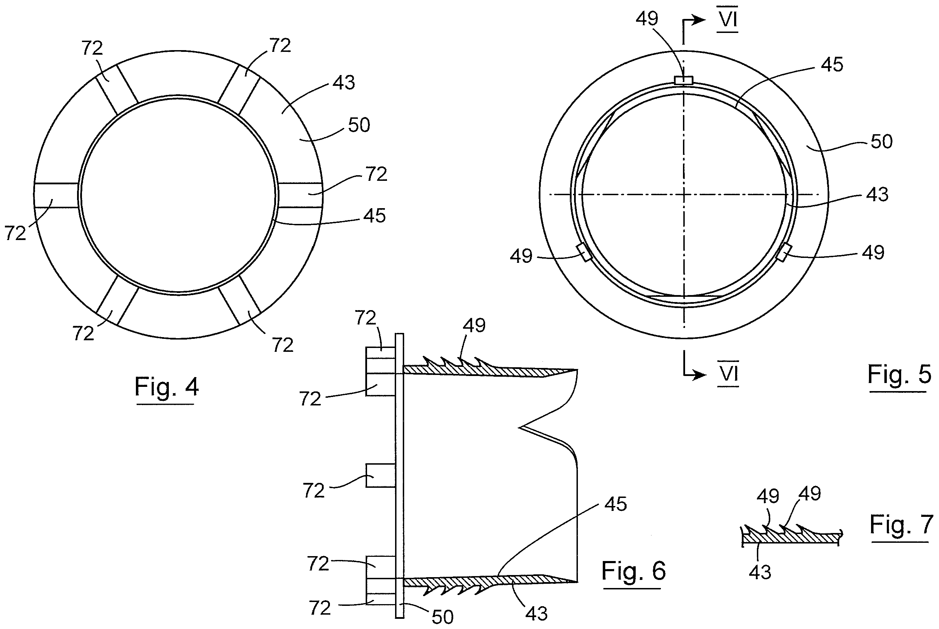

Referring to the drawings, and initially to Figs. 1 to 11, there is illustrated a roll according to the invention, indicated generally by the reference numeral 1, of film material, also according to the invention and indicated generally by the reference numeral 3. The film 3 is of translucent plastics material, which in this case is oxo-biodegradable polyethylene, and is adapted for covering soil 4 in which seeds 5 are sown and for covering the soil 4 while the seeds 5 are germinating. The film 3 is particularly suitable for covering soil in which cob corn seeds 5 have been sown in order to permit germinating of the seeds 5 into plants 6 which grow through the film 3 as will be described in more detail below.
The film 3 is supplied in the roll 1, which comprises a core element 8 onto which the film 3 is wound. An elongated bore 9 extends longitudinally through and concentric with the core element 8. The core element 8 and the bore 9 as will be described in detail below are adapted for mounting the roll 1 of film 3 in a film dispenser (not shown) with the roll 1 supported on spindles of the film dispenser engaged in the bore 9 of the core element 8. The film dispenser typically would be mounted on a cob corn seed sowing apparatus (also not shown) of the type disclosed in PCT published Application Specification No.
WO 97/31523. In such a cob corn seed sowing apparatus the film 3 is dispensed from the roll 1 by the film dispenser (not shown) of the sowing apparatus as the seeds are being sown by the apparatus for covering the sown soil. The core element 4 as will also be described in detail below is adapted for engagement in the film dispenser of the sowing apparatus for tensioning of the film 3 as the film 3 is being dispensed.

The seeds 5 in this embodiment of the invention are sown in elongated beds also according to the invention, in this case raised beds 10 of soil. Two spaced apart parallel rows 12 of the seeds 5 are sown in each raised bed 10. The seeds 5 are sown in the rows 12 at appropriate spaced apart intervals. Typically the spacing between the rows 12 of the seeds 5 is approximately 675mm, and the spacing between the seeds 5 in each row 12 is approximately 100mm to 120mm. The width of each bed 10 is approximately 1,000mm.

The film 3 is of width sufficient to extend across each bed 10 and to extend downwardly on respective opposite sides 14 of the bed 10 as will be described below. When the film 3 has been laid on the bed 10, with the film 3 extending downwardly on the respective opposite sides 14 of the bed 10, the portions of the film 3 extending downwardly over the sides 14 of the bed 10 are back-filled with soil in order to encase and trap the portions of the film 3 adjacent the sides 14 of the bed 10 in soil 4.

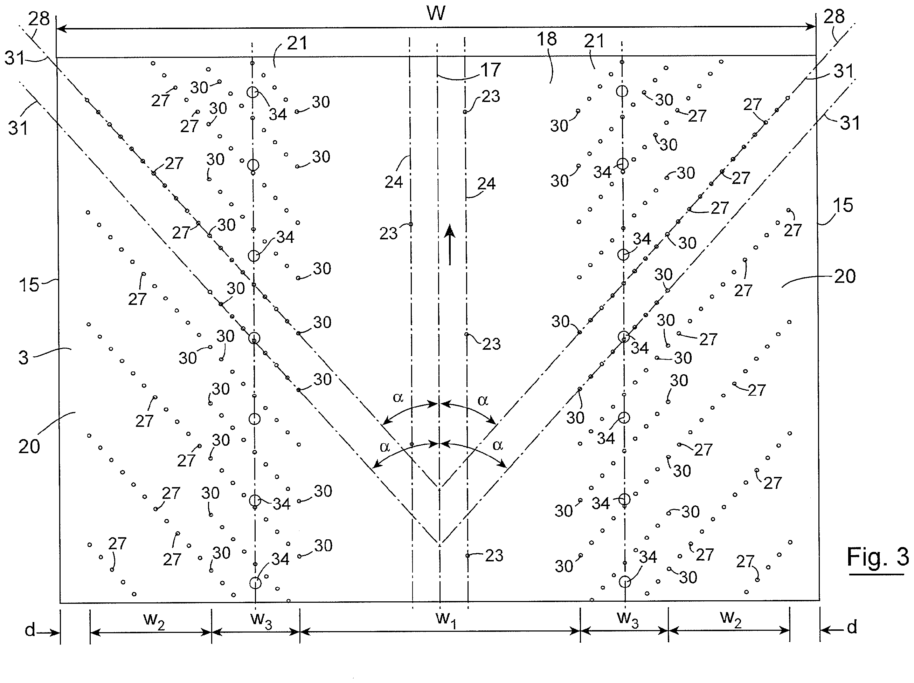

Referring now in particular to Fig. 3, the film 3 is of width W of 1,375mm and extends longitudinally between respective opposite longitudinally extending side edges 15, and defines a main longitudinally extending centre line 17. A longitudinally extending central portion 18 of width W₁ of approximately 489mm extends centrally along the film 3. Side portions 20 of width W₂ of approximately 210mm of the film 3 extend longitudinally along the film 3 adjacent the respective side edges 15. The side portions 20 are adapted to extend downwardly over the respective sides 14 of bed 10 and to be encased in soil as briefly discussed above, and as will be discussed below in more detail. Opposite longitudinally extending intermediate portions 21 extend longitudinally on respective opposite sides of the central portion 18 of the film 3 and between the central portion 18 and the respective opposite side portions 20. Each intermediate portion 21 is of width W₃ of approximately 160mm. The intermediate portions 21 are adapted to extend along the top surface 22 of the bed 10 over the respective rows 12 of the seeds 5 as will be described below. The central portion 18 of the film 3 is adapted to extend along the top surface 22 of each bed 10 at a longitudinally extending portion of the bed 9 between the rows 12 of the seeds 5. The intermediate portions 21 and the side portions 20 are equi-spaced on opposite sides of the main centre line 17 of the film 3.

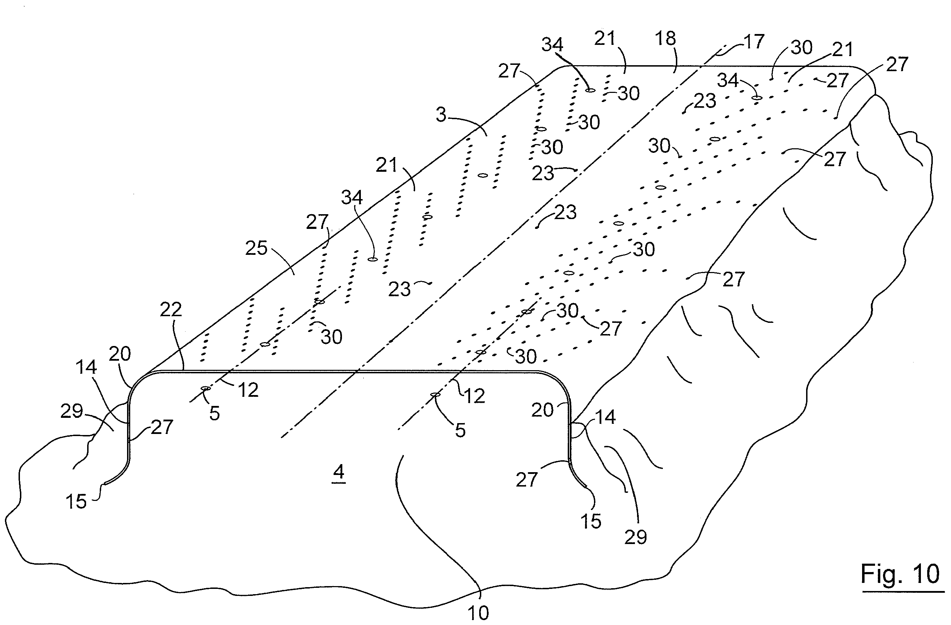

A plurality of spaced apart first openings 23 are provided in two spaced apart parallel first rows 24 in the central portion 18 for accommodating rainwater from an outer surface 25, see Fig. 10, of the film 3 into the soil in the bed 10 beneath the film 3 between the rows 12 of the seeds 5. The first openings 23 are of circular shape of diameter of approximately 10mm. The first rows 24 are equi-spaced on opposite sides of the main centre line 17, and the perpendicular spacing between the first rows 24 of the first openings 23 is approximately 100mm. The spacing between adjacent ones of the first openings 23 in each first row 24 is approximately 150mm. However, the first openings 23 in one of the first rows 24 are staggered relative to the first openings 23 in the other one of the first rows 23, and in this embodiment of the invention the first openings 23 in one of the first rows 24 are located approximately halfway between a corresponding pair of first openings 23 in the other one of the first rows 24.

A plurality of first keying means comprising spaced apart second openings 27 are configured in parallel spaced apart second rows 28 in the side portions 20 of the film 3 for accommodating soil therethrough of the soil encasing the respective side portions 20 for keying the side portions 20 in the encasing soil, and in turn anchoring the film 3 in the soil. The second opening 27 in the side portions 20 of the film 3 accommodate soil 4 of the bed 10 with soil 29 back-filled against the side portions 20, so that the soil 4 of the bed 10 and the back-filled soil 29 form one homogeneous mass extending through the second openings 27 for keying the side portions 20 of the film 3 in the soil with the side portions 20 sandwiched between the soil 4 of the bed 10 and the back-filled soil 29. The second openings 27 are of circular shape of diameter of approximately 5mm for accommodating soil therein so that the back-filled soil 29 forms with the soil 4 of the bed a single homogeneous mass through the second openings 27 to thereby key and anchor the side portions 20 in the soil 4. The spacing between the second openings 27 in each second row 28 centre to centre is approximately 25mm. The second rows 28 of the second openings 27 extend at an angle α relative to the main centre line 17 of the film 3, which in this embodiment of the invention is approximately 41° to the main centre line 17. The perpendicular spacing between the second rows 28 of the second openings 27 is approximately 135mm.

The second rows 28 of the second openings 27 extend across each side portion 20 from the boundary of the side portion 20 with the adjacent intermediate portion 21 towards the adjacent side edge 15 of the film 3, and terminate at a perpendicular distance d of approximately 53mm from the adjacent side edge 15 of the film 3.

A plurality of third openings 30 in spaced apart parallel third rows 31 extend through the film 3 in the respective intermediate portions 21 for accommodating exchange of air between the ambient atmosphere external of the film 3 and a cavity or cavities which form between the film 3 and the top surface 22 of the bed 10. This permits escape of high temperature air which may be heated by sunlight in the cavity or cavities between the film 3 and the top surface 22 of the bed 10, and also permits the temperature of the air in the cavity or cavities between the film 3 and the top surface 22 of the bed 10 to be maintained substantially at the ambient air temperature external of the film 3.

The third openings 30 are substantially circular and of diameter of approximately 5mm. The spacing between the third openings 30 in the respective third rows 31 is approximately 25mm centre to centre. The third rows 31 of the third openings 30 extend relative to the main centre line 17 at the angle α of approximately 41°. Indeed, in this embodiment of the invention the second rows 28 of second openings 27 extend from alternate ones of the third rows 31 of the third openings 30. Accordingly, in this embodiment of the invention the perpendicular spacing between the third rows 31 of the third openings 30 is approximately 67.5mm, in other words, half the perpendicular spacing between the second rows 28.

Two spaced apart parallel fourth rows 33 of fourth openings 34 extending through the film 3 extend longitudinally along the film 3 through the respective intermediate portions 21 for accommodating plants 35 which grow from the seeds 5 through the film 3. Each fourth row 33 of the fourth openings 34 is substantially centrally located in the corresponding intermediate portion 21 of the film 3. The fourth openings 34 are of substantially circular shape and are of diameter of approximately 20mm. The spacing between the fourth openings 34 in each fourth row 33 substantially corresponds to the spacing between the seeds 5 in the corresponding row 12 of the seeds 5.

In this embodiment of the invention the film 3 is substantially transparent, and is slightly tinted with a primary colour, which in this case is a slight green tint. It has been found that by slightly tinting the film 3 with a green tint, optimum soil temperatures relative to the corresponding external ambient air temperature is achieved. The film 3 is of thickness of approximately 0.007mm.

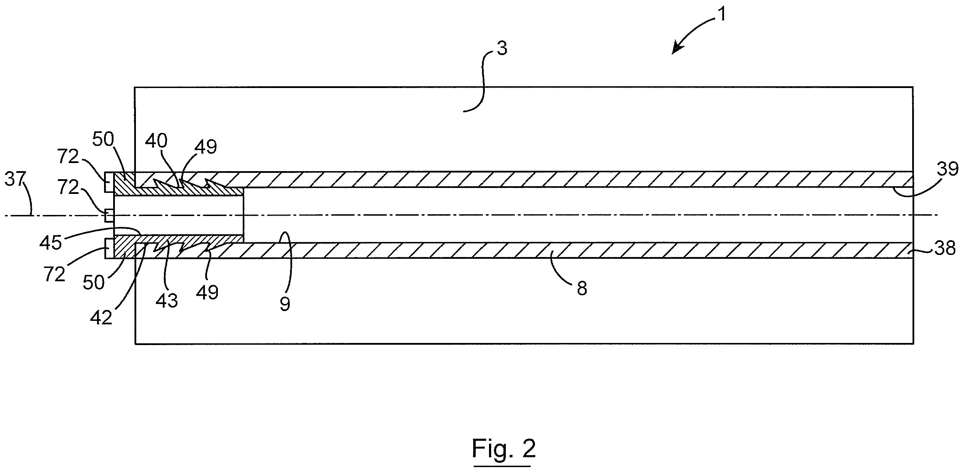

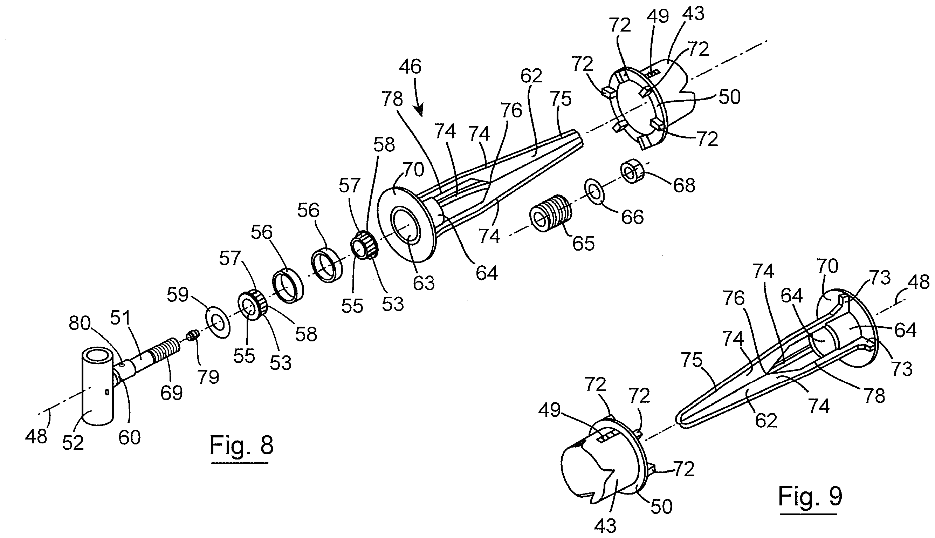

Referring now in particular to Fig. 2 and Figs. 4 to 9, the core element 8 of the roll 1 will now be described. The core element 8 defines a central axis 37 which is concentric with the bore 9, and about which the roll 1 is rotatable for dispensing film 3 therefrom. The bore 9 terminates at one end 38 in an end portion which forms a first spindle receiving bore 39 which is adapted to engage a rotatably mounted idler spindle (not shown) of the film dispenser (not shown) of the sowing apparatus (also not shown). An opposite end 40 of the bore 9 forms a plug receiving bore 42 for receiving and engaging an end plug 43. A second spindle receiving bore 45 extends through the end plug 43 for engaging a rotatably mounted tensioning spindle 46 which is described below with reference to Figs. 8 and 9 of the film dispenser. The end plug 43 and the second spindle receiving bore 45 are concentric with the central axis 37 of the core element 8. The rotatable spindle (not shown) and the tensioning spindle 46 of the film dispenser are adapted for receiving and mounting the roll 1 of film 3 in the film dispenser with the central axis 37 of the core element 8 coinciding with a rotational axis 48 defined by the idler spindle (not shown) and the tensioning spindle 46 of the dispenser (not shown), so that the film 3 is dispensed with a degree of tension formed therein as the sowing apparatus moves forward during sowing of the seeds 5.

The end plug 43 comprises a means for engaging the bore 9 of the core element 8, so that the end plug 43 is engaged fast with the core element 8. In this embodiment of the invention the means for engaging the end plug 43 fast with the core element 8 comprises three equi-spaced apart longitudinally extending rows of gripping teeth 49 which engage the core element 8 within the bore 9 with a tight gripping action for maintaining the end plug 43 fast with the core element 8. A flange 50 extends around and radially outwardly from the end plug 43 for engaging the adjacent end 40 of the core element 8. Before describing the end plug 43 further, the tensioning spindle 46 will first be described.

Referring now to Figs. 8 and 9, the tensioning spindle 46 comprises a stationary shaft 51 extending from a support member 52 of the film dispenser. The stationary shaft 1 defines the rotational axis 48 of the tensioning spindle 46. A bearing means comprising a pair of tapered roller bearings 53 are mounted on the stationary shaft 51. Each tapered roller bearing 53 comprises an inner core element 55, an outer sleeve 56 and a cage 57 which rotatably carries rollers 58 of the roller bearings 53. The inner core elements 55 are mounted fast on the shaft 51 with a first washer 59 abutting a shoulder 60 on the stationary shaft 51, and with the first washer 59 sandwiched between the shoulder 60 and the inner core element 55 of the adjacent roller bearing 53. The roller bearings 53 are mounted with their respective cages 57 of the rollers 58 tapering in opposite directions, and in this embodiment of the invention tapering inwardly towards each other. A spindle element 62 is rotatably carried on the roller bearings 53 and is rotatable about the rotational axis 48 defined by the stationary shaft 51. The spindle element 62 comprises an open ended bearing receiving bore 63 formed in a bearing receiving sleeve 64 of the spindle element 62, which is mounted on the roller bearings 53 with the respective outer sleeves 56 of the roller bearings 53 engaged in the bearing receiving bore 63 and fast with the bearing receiving sleeve 64, and in turn fast with the spindle element 62.

A friction inducing means for inducing a frictional resistance between the spindle element 62 and the stationary shaft 51 comprises a compression spring 65 which is carried on the stationary shaft 51 and is engageable with the core element 55 of the adjacent roller bearing 53. A second washer 66 also mounted on the stationary shaft 51 is located between the compression spring 65 and a nut 68 which is engageable with a threaded portion 69 of the stationary shaft 51. By increasing the compressive force in the compression spring 65 by tightening the nut 68 onto the threaded portion 69 of the stationary shaft 51 frictional resistance is generated in the bearings 53 between the rollers 58 thereof and the inner core element 55 and the outer sleeve 56 of each roller bearing 53, which thereby increases the resistance of the spindle element 62 to rotation, thereby inducing tension in the film 3 as it is being drawn from the roll 1 in the film dispenser (not shown). Relaxing the compressive force in the spring 65 by loosening the nut 68 reduces the frictional resistance to rotation of the spindle element 62, and in turn reduces the tension induced in the film 3 as it is being drawn from the roll 1 in the film dispenser (not shown). Accordingly, the nut 68 acts as an adjusting means for adjusting the frictional resistance in the roller bearings 53, and in turn for adjusting the tension induced in the film 3 as it is being drawn from the roll 1.

A flange 70 extends around and radially outwardly from the sleeve 64 of the spindle element 62 for abutting the end plug 43. A second keying means for keying the end plug 43 to the spindle element 62 of the tensioning spindle 46 comprises pairs of interengageable complimentary formations, one of which formations of the pairs of interengageable complimentary formations comprises six first key elements 72 which extend axially from the flange 50 of the end plug 43 for engaging the others of the formations of the pairs of interengageable complimentary formations which are provided by three second key elements 73, which extend axially from the flange 70 of the spindle element 62. Pairs of adjacent ones of the first key elements 72 of the end plug 43 engage between two adjacent ones of the second key elements 73 of the spindle element 62 when the flanges 50 and 70 of the end plug 43 and the spindle element 62, respectively, are abutting each other.

Ribs 74 extend longitudinally along the sleeve 64 of the spindle element 62 from the second key elements 73 for engaging the second spindle receiving bore 45 in the end plug 43. The ribs 74 taper inwardly to form a lead-in portion 75 for facilitating ease of engaging the spindle element 62 in the second spindle receiving bore 45 in the end plug 43, and for axially centring the end plug 43 and in turn the roll 1 of film 3 on the spindle element 62. The ribs 74 are joined at 76, and extend from the joint 76 towards a distal end 77 so that the ribs 74 from the position 76 effectively reinforce each other to form the lead-in portion 75. Openings 78 defined by the ribs 74 provide access to the nut 68 on the shaft 51 to permit adjustment of the nut 68 for adjusting the frictional force generated in the roller bearings 53 for in turn adjusting the frictional resistance to rotation of the spindle element 62, and in turn the tension with which the film 3 is drawn from the roll 1 from the film dispenser (not shown).

A grease nipple 79 located in the end of the stationary shaft 51 facilitates greasing of the roller bearings 53. The grease nipple 79 is accessable through the openings 78 between the ribs 74. A bore (not shown) extends through the stationary shaft 51 for accommodating grease from the grease nipple 79 through radially extending grease ports 80 which accommodate the grease to the roller bearings 53.

In use, prior to mounting the roll 1 of film 3 on the idler spindle (not shown) and the tensioning spindle 46 of the film dispenser (also not shown), the nut 68 is adjusted to produce the desired tension with which the film 3 is to be drawn from the roll 1. With the end plug 43 engaged in the plug receiving bore 42 of the bore 9 of the core element 8, the roll 1 is then mounted in the film dispenser (not shown) of the seed sowing apparatus (also not shown) by engaging the idler spindle (not shown) in the first spindle receiving bore 39 of the bore 9 of the core element 8, and by engaging the spindle element 62 of the tensioning spindle 46 in the second spindle receiving bore 45 of the end plug 43. As the end plug 43 is being engaged with the spindle element 62 pairs of the first key elements 72 of the end plug 43 engage between corresponding ones of the second key elements 73 of the spindle element 62. With the roll 1 so engaged on the idler spindle (not shown) and the tensioning spindle 46, the film dispenser and the sowing apparatus are ready for use once charged with the seeds to be sown.

Initially the film 3 is manually drawn from the roll 1 and is spread over the top surface 22 of the raised bed 10 to be sown as illustrated in Fig. 10, the side portions 20 of the film 3 are folded downwardly over the sides 14 of the raised bed 10 and anchored in the soil by initially back-filling soil 29 against the side portions 20 of the film 3 manually, in order to sandwich the side portions 20 between the soil 4 of the bed 10 adjacent the sides 14 thereof and the back-filled soil 29, see Fig. 10, to initially secure the side portions 20 of the film 3. Thereafter as the sowing apparatus moves forward and sows the seeds 5 in the rows 12, the film 3 is drawn from the roll 1 at the desired pre-set tension. Once the sowing apparatus commences to move forward, a pair of plough elements on respective opposite sides of the sowing apparatus back-fills the soil inwardly against the side portion 20 of the film 3 to form the back-filled soil 29.

Soil extending through the second openings 27 in the side portions 20 of the film 3 between the soil 4 in the bed 10 and the back-filled soil 29 forms one homogeneous mass with the soil 4 of the bed 10 and the back-filled soil 29 to key the side portions 20 in the soil which encases the side portions 20.

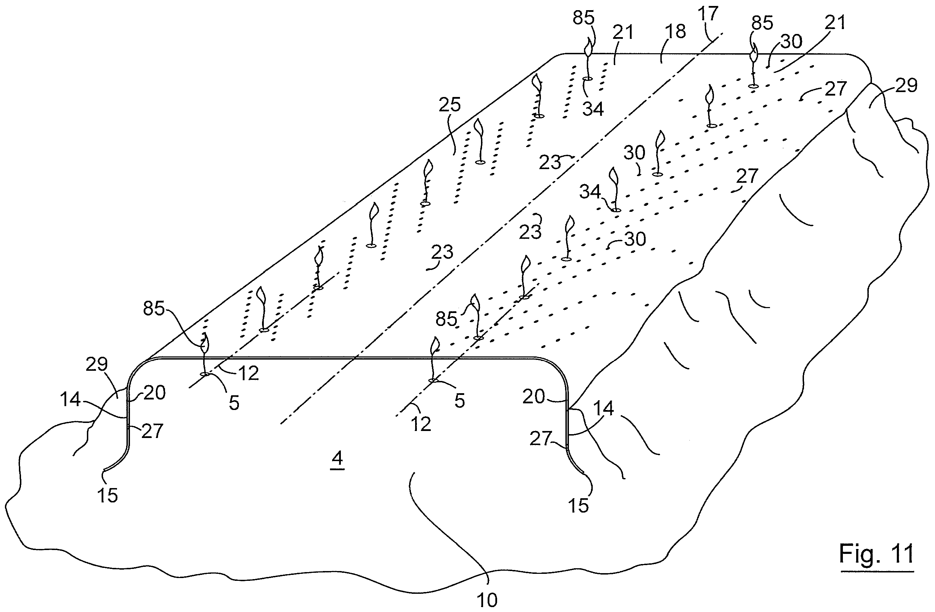

Rainwater is accommodated through the first openings 23 into the raised bed 10 to maintain the seeds moist. Air is exchanged through the third openings 30 adjacent the rows 12 of the seeds 5 between the cavity or cavities formed in and between the top surface 22 of the raised bed 10 and the film 3 so that air in the cavity or cavities is exchanged with ambient air external of the film 3. This exchange of air between the air in the cavity or cavities and the ambient air external of the film acts to maintain the temperature beneath the film at a temperature of not more than 37°C adjacent the seeds 5 in order to avoid overheating, and thus damaging the seeds 5. As the seeds germinate into plants 85, see Fig. 11, and as the plants grow, the plants 85 burst through the fourth openings 34 in the film.

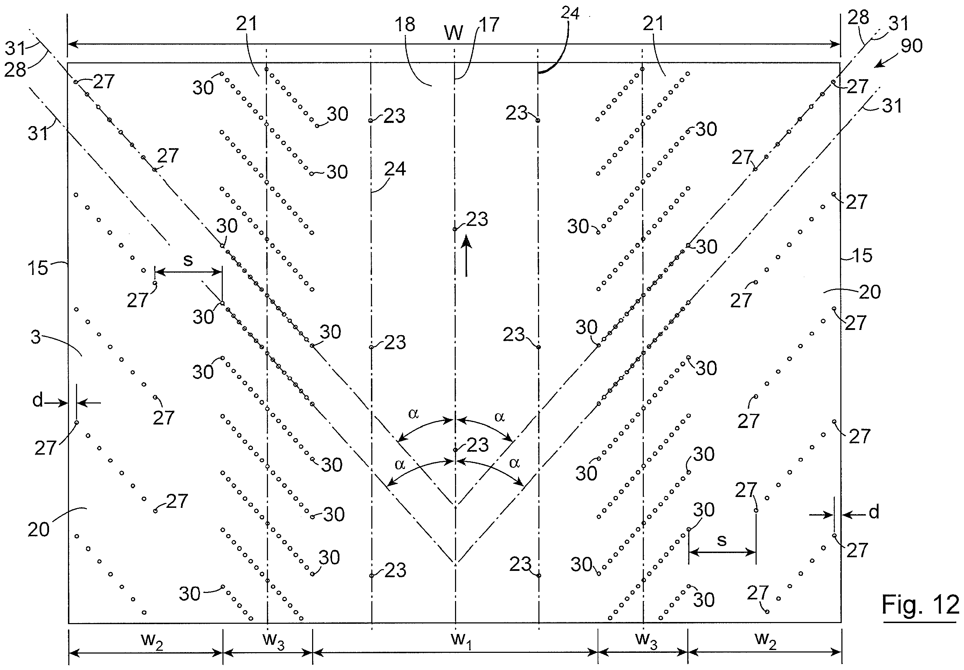

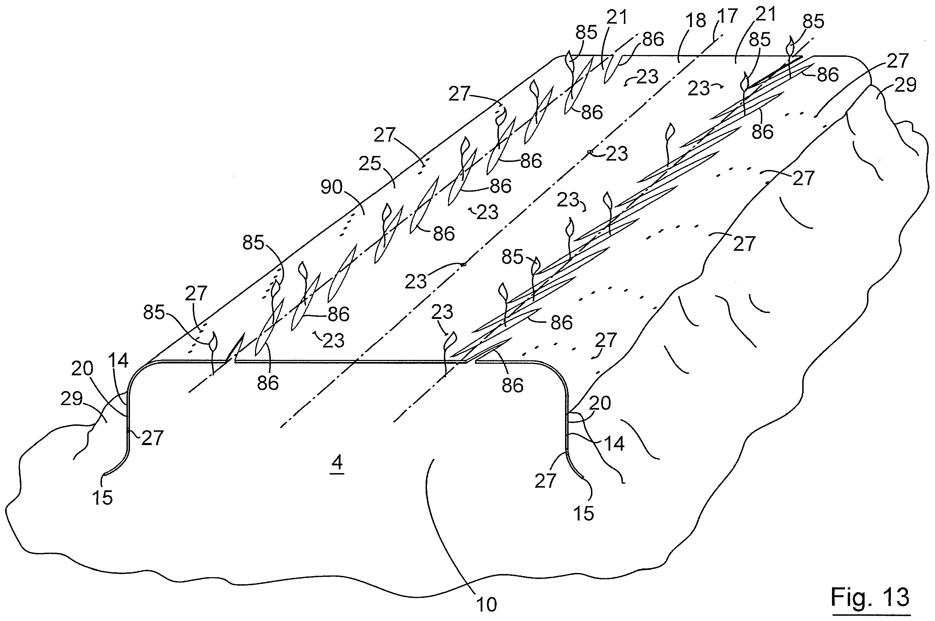

Referring now to Figs. 12 and 13, there is illustrated a film according to another embodiment of the invention, indicated generally by the reference numeral 90, of a roll (not shown) of the film 90. The film 90 is substantially similar to the film 3, and similar components are identified by the same reference numerals. The film 90 is of plastics material, in this embodiment of the invention, oxo-biodegradable polyethylene, and is substantially transparent with a slight green tint. The thickness of the film 90 is 0.007mm, and is similar to the thickness of the film 3. The width W of the film 90 between the respective side edges 15 thereof is 1,375mm, which is similar to the width W of the film 3. The main difference between the film 90 and the film 1 is in the positioning of the second rows 28 of the second openings 27, and in the third rows 31 of the third openings 30.

In this embodiment of the invention the second rows 28 of second openings 27 which are located in the side portions 20 extend substantially to the adjacent side edges 15 of the film 90. In this embodiment of the invention the second opening 27 of each second row 28 which is closest to the adjacent side edge 15 of the film 90 is spaced apart a perpendicular distance from the adjacent side edge 15 of the film 90 a distance d of approximately 10mm. However, the diameter of the second openings 27 and the centre to centre spacing of the second openings 27 in the corresponding second rows 28 is similar to that of the film 3, and the perpendicular spacing between the second rows 28 of the second openings 27 is similar to that of the film 3.

Turning now to the third rows 31 of third openings 30, in this embodiment of the invention the diameter of the third openings 30 is similar to that of the third openings of the film 3, however, the spacing between the third openings 30 centre to centre in each third row 31 is half that of the spacing centre to centre of the third openings 30 in each third row 31 of the film 3. In other words, the spacing centre to centre between the third openings 30 in the third rows 31 of the film 90 is approximately 12mm. This allows the third rows 31 of third openings 30 to fulfil two functions. Firstly, the third rows 31 of third openings 30 are located adjacent the respective rows 12 of the seeds 5, and thereby permit air exchange between ambient air external of the film and cavities which form between the film 90 and the top surface 22 of the raised bed 10 in order to maintain the temperature beneath the film 90 adjacent the rows 12 of the seeds 5 at a temperature of not more than 37°C.

Secondly, the closer centre to centre spacing between the third openings 30 in each third row 31 provides the added advantage that each third row 31 of third openings 30 acts as a severable row of perforations, which is readily severed and burst by an adjacent one of the plants 85 growing from one of the seeds 5.

As the plants 85 grow above the surface 22 of the bed 10, each plant 85 urges an adjacent portion of the film 90 upwardly, thereby stretching the film 90, which in turn results in the adjacent third row 31 of the third openings 30 severing along the length of the corresponding third row 31 of the third openings 30, to form an elongated slit 86 in the film 3 through which an adjacent plant 85 protrudes through the film 90 and continues to grow upwardly externally of the film 90, see Fig 13.

The perpendicular spacing between adjacent ones of the third rows 31 of the third openings 30 is 67.5mm, and is thus similar to the perpendicular spacing between the adjacent ones of the third rows 31 of the third openings 30 of the film 3.

Additionally, in this embodiment of the invention the third rows 31 of the third openings 30 are transversely spaced apart a distance s of approximately 120mm from the second rows 28 of the second openings 27. The reason for the transverse spacing s between the third rows 31 of the third openings 30 and the second rows 28 of the second openings 27 is to avoid any danger of the second rows 28 of second openings 27 perforating during laying of the film 90 on the raised bed 10 and during back-filling of the side portions 20 of the film 90. It is believed that if the second rows 28 of the second openings 27 extended immediately from the corresponding third rows 31 of third openings 30 during laying of the film 90 on the raised bed 10 and in particular during back-filling of the side portions 20 of the film 90, the third rows 31 of third openings 30 from which second rows 28 of second openings 27 would extend could commence to sever, and the severing of the third rows 31 could extend into the second rows 27 to thereby result in severing of those second rows 28 of second openings 27.

However, in this embodiment of the invention although the second and third rows 28 and 31 of second openings 27 and third openings 30, respectively, are transversely spaced apart by the distance s, the second rows 28 of second openings 27 are aligned with alternate ones of the third rows 31 of third openings 30. The angle α which the second and third rows 28 and 31 of second and third openings 27 and 30, respectively, make with the main centre line 17 is 41°, which is similar to the angle α defined between the second and third rows 28 and 31 of second and third openings 27 and 30, respectively, with the main centre line 17 of the film 3.

Additionally, in this embodiment of the invention three first rows 24 of first openings 23 are provided in the central portion 18 of the film 90. The centre one of the first rows 24 of first openings 23 coincides with the main centre line 17 of the film 90, and the other two first rows 24 of first openings 23 are equi-spaced apart from the main centre line 17 of the film 90 on respective opposite sides thereof.

The film 90 is provided in a roll wound onto a core element similar to the core element 8 of the roll 1 of the film 3.

Otherwise, the film 90 and its use is similar to the film 3.

While specific centre to centre spacings between the first, second and third openings in their respective rows have been described, the spacing between the first, second and third openings in their respective rows may be of any suitable or desired value.

Where the spacing between the third openings in the respective third rows is such as to facilitate severing of the film along the third rows, an additional advantage is achieved from the film according to the invention in that the film is readily easily severed along the third rows of the third openings by plants growing from the seeds for accommodating the plants through the film.
Needless to say, the spacing between the first, second and third rows may be any desired spacing. It will also be appreciated that while in the embodiment of the film described with reference to Figs. 12 and 13 the second and third rows are of second and third openings are transversely spaced apart a specific distance s, the transverse spacing between the second and third rows of second and third openings may be of any suitable or desired value.

While the films according to the invention have been described for use in the growing of corn, the films may be used in the growing of any plants from seeds. It will also be appreciated that while the beds according to the invention have been described as being raised beds, while this is desirable, it is not essential. It will also be appreciated that while the beds according to the invention have been described as comprising two rows of seeds, any suitable number of rows of seeds may be provided in each bed from one row upwards. Needless to say, the spacing between the rows of seeds, and the spacing between the seeds in the respective rows may vary, and in general, will be determined by the type of seeds being planted. Needless to say the perpendicular spacing between the third rows of the third openings and the location of the intermediate portions of the film, as well as the location of the third rows of the third openings may be selected to suit the type of seeds being sown.

It is also envisaged that the angle defined between the second and third rows of the second and third openings and the main longitudinally extending centre line extending through the film may be of any suitable or desired angle. Indeed, it will be appreciated that the second rows of second openings may extend at an angle relative to the longitudinally extending main centre line of the film at an angle different to that at which the third rows of third openings extend relative to the main centre line of the film.

It will also be appreciated that the roll of film may be adapted for engaging spindles or other suitable mounting means in a film dispenser, other than the spindles described.

While the rolls of film according to the invention have been described for covering beds in which com seeds are planted, it will be appreciated that the films may be used for covering any type of bed with any type of seeds sown therein. For example, the film has being successfully used for covering beds in which sunflower seeds have been grown and many other seeds of other crops.

## Claims

1. An end plug having a spindle receiving bore (45) extending therethrough, and being engageable in a plug receiving bore (9, 42) of a core element (8) of a roll (1) of film (3) with the spindle receiving bore (45) concentric with a central axis (37) of the core element (8), the end plug (43) comprising, a means (49) for engaging the plug receiving bore (9, 42) of the core element (8) with the end plug (43) fast with the core element (8), and a keying means (72, 73) for keying the end plug (43) to a spindle element (62) of a tensioning spindle (46) in the spindle receiving bore (45), the keying means (72, 73) comprising one (72) of a pair of interengageable complementary formations (72, 73) formed on the end plug (43) for engaging the other one (73) of the pair of interengageable complementary formations (72, 73) formed on the tensioning spindle (46).

2. An end plug as claimed in Claim 1 **characterised in that** a flange (50) extends around and radially outwardly from the end plug (43) for engaging an adjacent end (40) of the core element (8).

3. An end plug as claimed in Claim 2 **characterised in that** the one of the interengageable complementary formations (72) formed on the end plug (43) comprises a first key element (72) extending axially form the flange (50) of the end plug (43).

4. An end plug as claimed in any preceding claim **characterised in that** the means (49) for engaging the end plug (43) fast with the plug receiving bore (9, 42) of the core element (8) comprises three circumferentially equi-spaced apart longitudinally extending rows of gripping teeth (49) which engage the core element (8) within the bore (9, 42) with a tight gripping action for maintaining the end plug (43) fast with the core element (8).

5. A combination of a tensioning spindle and an end plug (43) for a roll (1) of film (3) **characterised in that** the end plug (43) has a spindle receiving bore (45) for engaging a spindle element (62) of the tensioning spindle, and a keying means (72, 73) is provided for keying the end plug (43) to the spindle element (62), the keying means (72, 73) comprising a pair of interengageable complementary formations (72, 73) a first one (72) of the pair of interengageable complementary formations (72, 73) comprising a first key element (72) formed on the end plug (43), and a second one (73) of the pair of interengageable complementary formations (72, 73) comprising a second key element (73) formed on the spindle element (62).

6. A combination as claimed in Claim 5 **characterised in that** six first key elements (72) are located on the end plug (43) for engaging three second key elements (73) of the tensioning spindle (46).

7. A combination as claimed in Claim 13 **characterised in that** pairs of adjacent ones of the first key elements (72) of the end plug (43) are configured to engage between two adjacent ones of the second key elements (73) of the tensioning spindle (46).

8. A roll of film comprising a core element (8) on which film (3) is wound, the core element (8) having an elongated bore (9, 42) extending longitudinally therethrough and concentric with the core element (8) and an end plug (43) located in the bore (9, 42) of the core element (8) adjacent one end thereof, the end plug (43) comprising a means (49) for engaging the bore (9, 42) of the core element (8) with the end plug (43) fast with the core element (8).

9. A roll of film as claimed in Claim 8 **characterised in that** the means (49) for engaging the end plug (43) fast with the core element (8) in the bore (9, 42) thereof comprises three circumferentially equi-spaced apart longitudinally extending rows of gripping teeth (49) for engaging the core element (8) within the bore (9, 42) with a tight gripping action for maintaining the end plug (43) fast with the core element (8).

10. A roll of film as claimed in Claim 8 or 9 **characterised in that** the end plug (43) defines a spindle receiving bore (45) extending therethrough, and a keying means (72, 73) for keying the end plug (43) to a spindle element (62) of a tensioning spindle (46) in the spindle receiving bore (45), the keying means (72, 73) comprising one (72) of a pair of interengageable complementary formations (72, 73) formed on the end plug (43) for engaging the other one (73) of the pair of interengageable complementary formations (72, 73) formed on the spindle element of the tensioning spindle.
